# EUROPEAN PATENT APPLICATION

(11) **EP 1 251 112 A2**
(43) Date of publication of application: **23.10.2002**
(21) Application number: 02252265.0
(22) Date of filing: 27.03.2002
(51) Int. Cl.: C04B 35/00

(54) **Ceramic polycrystal and method of manufacturing the same**

(30) Priority: 29.03.2001 JP 2001095673
(71) Applicant: NGK INSULATORS, LTD., Nagoya City Aichi Pref. (JP)
(72) Inventor: Kurashina, Mitsuru, c/o NGK Insulators, Ltd., Nagoya-shi, Aichi-ken, 467-8530 (JP); Niimi, Norikazu, c/o NGK Insulators, Ltd., Nagoya-shi, Aichi-ken, 467-8530 (JP); Yamaguchi, Hirofumi, c/o NGK Insulators, Ltd., Nagoya-shi, Aichi-ken, 467-8530 (JP)
(74) Representative: Paget, Hugh Charles Edward

(57) **Abstract**

A ceramic polycrystal and a method of manufacturing such a ceramic polycrystal having thermal stability enough to be used in an arc tube are provided. The ceramic polycrystal has crystalline particles. Each of crystalline particles has a crystalline structure selected from triclinc, monoclinic, rhombi, tetragonal, trigonal, and hexagonal systems, with an average grain size being not less than 5 µm and a linear transmittance being not less than 8%.

## Description

### BACKGROUND OF THE INVENTION

### 1. Field of the Invention

The present invention relates to a ceramic polycrystal to be used as a constitutive part of an arc tube of a high-pressure discharge lamp such as a metal halide lamp and also relates to a method of manufacturing such a ceramic polycrystal.

### 2. Description of the Related Art

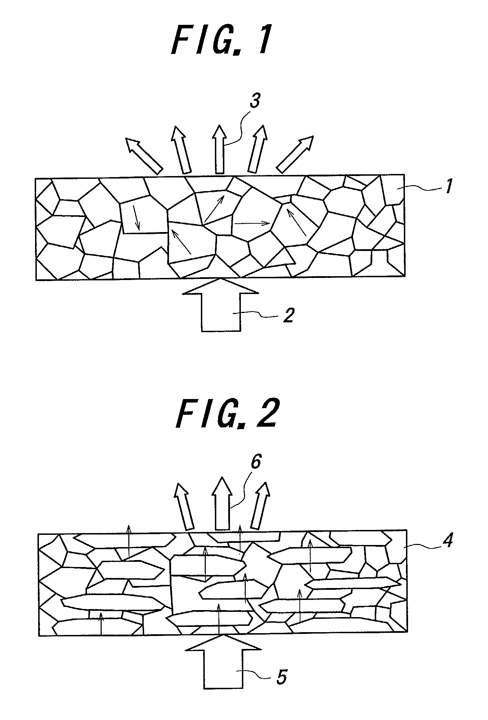

One of ceramic polycrystals known in the art has been prepared by sintering alumina polycrystal as shown in Fig. 1. The crystalline direction of such an alumina polycrystal 1 is irregular, so that the linear transmittance of light through the alumina polycrystal 1 can be lowered. In other words, as the alumina polycrystal 1 is a doubly refracting transmission , the amount of light 3 vertically generated from one side of the alumina polycrystal is decreased with respect to the amount of light 2 vertically incident on the opposite side of the alumina polycrystal. Consequently, it is difficult for the alumina polycrystal 1 to obtain a linear transmittance of not less than 8% which is desired for an arc tube.

For providing a ceramic polycrystal with a linear transmission of not less than 8%, sintered bodies using cubic-system materials such as YAG and Y₂O₃ have been used in the art. In addition, there is a report about the improvement in linear transmittance by minimizing the crystalline grain size of the sintered body of polycrystalline alumina into the order of sub-microns (Morinaga et al., " Effect of Grain Size on Translucency of Polycrystalline Alumina", Journal of the Mining and Materials Processing Institute of Japan, 471-474, No. 6, vol. 115, 1999).

However, it is known that the ceramic polycrystalline sintered bodies comprised of cubic-system materials such as YAG and Y₂O₃ have disadvantages.

As one of such disadvantages, cracks occur when the thermal change is occurred form a comparatively high temperature (not less than 1200°C) to a room temperature (about 27°C) because of its poor resistance to impact in spite of its high corrosion-resistance. Therefore, polycrystalline sintered bodes made of cubic-system materials are not suitable for arc tubes to be used in lamps that can be heated at temperatures form not less than 1200°C to a room temperature.

As another disadvantage, in the case of minimizing the grain size of crystalline particle in the ceramic polycrystalline sintered body into the order of sub-microns, the grain size of crystalline particle increases to the order of microns when the sintered body is heated up to not less than 1200°C, resulting in the decrease in its linear transmittance. For this reason, ceramic polycrystalline sintered bodies with grain sizes of sub-micron orders are also not suitable for lamp arc tubes.

### DISCLOSURE OF THE INVENTION

It is an object of the present invention to provide a ceramic polycrystal having a comparatively high linear transmittance of not less than 8% in addition to have a heat resistance enough to be used in an arc tube.

According to one aspect of the present invention, there is provided a ceramic polycrystal having a comparatively high linear transmittance of not less than 8% in addition to have a heat resistance enough to be used in an arc tube.

It is another object of the present invention is to provide a method for manufacturing of such a novel ceramic polycrystal.

According to one aspect of the present invention, there is provided a ceramic polycrystalline comprises crystals, where each crystalline particle has a crystalline structure selected from triclinic, monoclinic, rhombic, tetragonal, trigonal, and hexagonal system with an average grain size in the range of 5 µm to 50 µm and a linear transmittance of 8% or more.

With the above-mentioned ceramic polycrystal according to the invention, the ceramic polycrystal of the present invention has a crystalline structure of a triclinic, monoclinic, rhombic, tetragonal, trigonal, or hexagonal system. In other words, the ceramic polycrystal has a crystalline structure except a cubic system. Consequently, there is no fear to occur any cracks under temperature variations from 1200°C to a room temperature (about 27°C), whereas such cracks occur in the conventional ceramic polycrystals having cubic crystalline system.

As explained in the above description of the conventional ceramic polycrystal, the influence of double refraction becomes remarkable if the average grain size is less than 5 µm. In this case, there is a fear of decreasing the linear transmittance of the ceramic polycrystalline. In the average grain size is greater than 50 µm, on the other hand, the strength of the ceramic polycrystal becomes low. According to the first aspect of the present invention, therefore, crystals that made up the ceramic polycrystal of the present invention have an average grain size of 5 to 50 µm, so that it can be prevented from the decrease in linear transmittance and the decrease in strength. In this case, preferably, a grain orientation rate in the ceramic polycrystal may be not less than 20%.

Here, the ceramic polycrystal has an appropriate crystalline structure (e.g., a most stable crystalline structure) depending on its kind. For example, if the ceramic polycrystal is made of alumina, it generally becomes most stable when the crystalline structure is of a hexagonal system.

In this specification, the term "linear transmittance" means that the ratio between the amount of light incident to the predetermined side of the ceramic polycrystal and the amount of light generated from the opposite side of the ceramic polycrystal in the same direction as that of the incident light. Thus, the amount of output light in the direction different from the incident light is not considered in the calculation of linear transmittance. On the other hand, the term "total optical transmittance" means that the ratio between the amount of light incident to the predetermined side of the ceramic polycrystal and the amount of light generated from the opposite side of the ceramic polycrystal in all directions. Furthermore, the term "grain orientation rate" means the ratio of the cross-sectional area of oriented crystalline particles to the cross-sectional area of the whole crystalline particles.

According to another aspect of the present invention, there is provided a method for manufacturing a ceramic polycrystal, comprising the steps of: preparing a ceramic compact with aligning not less than 20% of plate-like crystalline particles in a flowing direction of slurry or greenware, calcining the ceramic compact to provide a calcined compact, and obtaining a sintered compact.

With the above-mentioned method according to the invention, not less than 20% of plate-like crystalline particles are aligned in a flowing direction of slurry or greenware to obtain a grain orientation rate of not less than 20%. Therefore, the present invention allows the ceramic polycrystal having a thermal stability sufficient to be used in an arc tube and also having a comparatively higher linear transmittance of not less than 8%.

The alignment of not less than 20% of plate-like crystalline particles in a flow direction of slurry or greenware may be attained using the means of slip casting, gel casting, or extrusion molding or casting.

### Brief Description of the Drawings

Embodiments of the ceramic polycrystal and the method of manufacturing the same according to the present invention will be explained below with reference to the accompanying drawings.

Fig. 1 is a cross sectional schematic diagram for illustrating a conventional ceramic polycrystal;

Fig. 2 is a cross sectional schematic diagram for illustrating a ceramic polycrystal in accordance of the present invention; and

Fig. 3 is a flowchart for illustrating the steps in the method for manufacturing a ceramic polycrystal in accordance with the present invention.

### Description of the Preferred Embodiments

Hereinafter, we will describe a ceramic polycrystal and a method for manufacturing such a ceramic polycrystal in detail with reference to the attached drawings in accordance with preferred embodiments of the present invention.

Fig. 2 is a cross sectional schematic diagram for illustrating a ceramic polycrystal as one of preferred embodiments of the present invention. In this embodiment, a ceramic polycrystal 4 has a crystalline structure of triclinic, monoclinic, rhombic, tetragonal, trigonal, or hexagonal system. An average grain size of crystalline particles in the ceramic polycrystal 4 is in the range of 5 µm to 50 µm. In addition, the linear transmission of the ceramic polycrystal 4 (i.e., the ratio of the amount of output light 6 vertically generated from one side of the ceramic polycrystal 4 to the amount of light 5 vertically incident on the opposite side of the ceramic polycrystal 4) is not less than 8%. Preferably, the grain orientation rate of the ceramic polycrystal 4 may be not less than 20%.

According to the present embodiment, as described above, the ceramic polycrystal 4 comprises crystalline particles having a crystalline structure selected from the group of triclinic, monoclinic, rhombic, tetragonal, trigonal, and hexagonal systems. In other words, the ceramic polycrystal is comprised of crystalline particles with a crystalline structure except a cubic system. Therefore, there is no fear to occur any cracks under temperature variations from 1200°C to a room temperature (about 27°C). In addition, crystalline particles that made up the ceramic polycrystal of the present invention have an average grain size of 5 to 50 µm, so that it can be prevented from the decrease in linear transmittance which will be caused by the growth of crystal. Consequently, the ceramic polycrystal 4 has an excellent thermal stability enough to be used in an arc tube and also has a comparatively higher linear transmittance of not less than 8%.

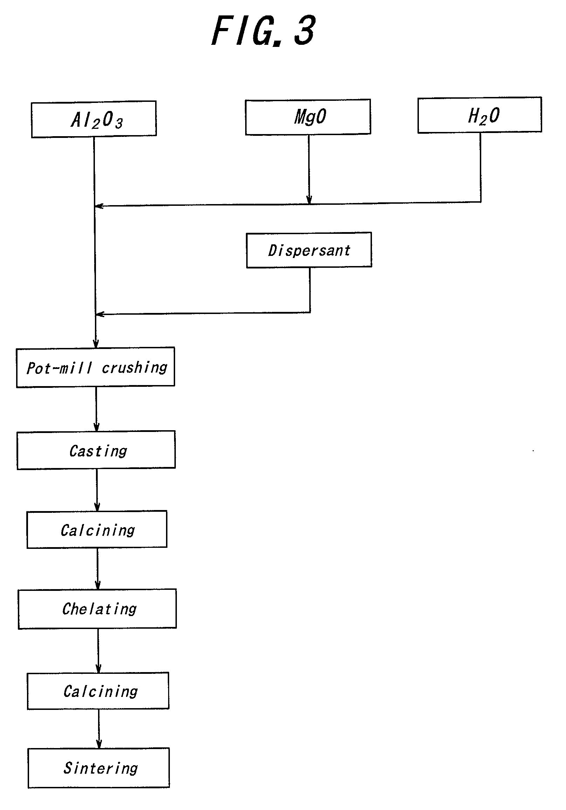

Fig. 3 is a flowchart for illustrating the steps in the method for manufacturing a ceramic polycrystal in accordance with one of preferred embodiments of the present invention. In this embodiment, but not limited to, the ceramic polycrystal is an Al₂O₃-MgO-based alumina polycrystal.

First, an α-alumina powdery material comprising plate-like crystalline particles with an average grain size of 0.5 µm is mixed with a predetermined amount of water so as to obtain a mixture having 250 ppm of MgO powders with an average grain size of 0.1 µm and 50% of powder-slurry concentration. Then, a dispersant such as polycarboxylate ammonium is added in the mixture, followed by crushing with a pot mill for 20 hours.

Subsequently, the mixture was subjected to a casting using a plaster mold to shape it into a compact in which not less than 20% of plate-like crystalline particles are aligned in a flow direction of slurry or greenware. The resulting compact is calcined at a temperature of 850°C under atmospheric conditions.

Then, the resulting calcined compact is dipped into a solution of ethylenediaminetetraacetic acid (EDTA) for chelating, followed by additional calcining at 1200°C under atmospheric conditions. The resulting calcined compact is further subjected to sintering at 1850°C under reduced atmospheric conditions, resulting in a final sintered compact.

The resulting sintered compact is subjected to the measurement of linear transmittance and the measurement value is 40%. The measurement is performed under conditions where a sintered compact of 1 mm in thickness is polished and is then exposed to a linear beam of 3 mm in diameter and 600 nm in wavelength. The linear beam passing through the compact is received by a photo receptor of 3 mm in diameter. The ratio of the amount of light received by the photo receptor after passing through the sintered compact to the amount of light directly received by the photo receptor is expressed as a percentage.

Also, the total optical transmittance of the sintered compact obtained as described above is 98% (measurement value). The measurement of total optical transmittance is performed by preparing an arc tube using the sintered compact, setting a halogen lamp into the arc tube, and measuring the total amount of light from the halogen lamp using an integrating-sphere photometer. In this case, the total optical transmittance is the ratio of the amount of light incident to the photometer after passing through the arc tube to the amount of light incident to the photometer without the presence of arc tube, expressed as a percentage.

The grain orientation rate of the sintered compact obtained as described above (i.e., the ratio of the cross-sectional area of the oriented particles to the cross-sectional area of the whole particles) is 40% when it is observed using a scanning electron microscope (SEM). In addition, the average grain size of the sintered compact is 28 µm when it is observed by SEM. Furthermore, the surface roughness of the sintered compact after polishing the surface thereof is 0.1 µm when it is measured using a contact-type surface roughness tester which is universally used in the art.

While the present invention has been described above with reference to certain preferred embodiments, it should be noted that they were present by way of examples only and various changes and/or modifications may be made without departing from the scope of the invention. For example, the ceramic polycrystal of the present invention may be used in another application such as a window material of a semiconductor device in addition to be applied on the arc tube of the high-pressure discharge lamp.

In the above embodiments, alternatively, any one of other alumina polycrystals such as aluminum nitride or other kinds of ceramic polycrystals may be used instead of Al₂O₃-MgO alumina polycrystal.

Greenwave may be used instead of slurry for aligning particles in the predetermined direction.

Furthermore, instead of casting, slip casting, extrusion molding, gel casting, or the like may be used.

The invention further consists in use of the ceramic polycrystal material of the invention or made by the method of the invention as a light transmitting element or window of a device, e.g. a high-pressure discharge lamp or semiconductor device.

## Claims

1. A ceramic polycrystal comprising crystalline particles, where each of crystalline particles has a crystalline structure selected from triclinc, monoclinic, rhombi, tetragonal, trigonal, and hexagonal systems, with an average grain size being not less than 5 µm and a linear transmittance being not less than 8%.

2. The ceramic polycrystal according to claim 1, wherein a grain orientation rate is not less than 20%.

3. A method of manufacturing a ceramic polycrystal, comprising the steps of:
preparing a ceramic compact with aligning 20% or more of plate-like crystalline particles in a flowing direction of slurry or greenware;
calcining the ceramic compact to provide a calcined compact;
and obtaining a sintered compact from the ceramic compact.

4. The method according to claim 3, wherein not less than 20% of plate-like crystalline particles are aligned in a flowing direction of slurry or greenware.
